# EUROPÄISCHE PATENTSCHRIFT

(11) **EP 2 923 550 B1**
(45) Veröffentlichungstag und Bekanntmachung des Hinweises auf die Patenterteilung: **19.10.2016**
(21) Anmeldenummer: 15160246.3
(22) Anmeldetag: 23.03.2015
(51) Int. Cl.: A01D 34/66, A01B 73/04

(54) **ARBEITSGERÄT ZUM ANKUPPELN AN EINE LANDWIRTSCHAFTLICHE ARBEITSMASCHINE**
WORK DEVICE FOR COUPLING TO AN AGRICULTURAL WORK MACHINE
APPAREIL DE TRAVAIL POUR L'ACCOUPLEMENT À UNE MACHINE DE TRAVAIL AGRICOLE

(30) Priorität: 28.03.2014 DE 102014104379
(43) Veröffentlichungstag der Anmeldung: 30.09.2015
(73) Patentinhaber: CLAAS Saulgau GmbH, 88348 Bad Saulgau (DE)
(72) Erfinder: Ober, Martin, 78736 Epfendorf-Trichtingen (DE); Reuter, Johannes, 88348 Bad Saulgau (DE); Zwanzger, Matthias, 91486 Üehlfeld (DE)

(56) Entgegenhaltungen:
- EP-A1- 1 800 529
- EP-A1- 2 347 644
- EP-A2- 2 248 408
- DE-U1-202007 015 633

## Beschreibung

Die Erfindung betrifft ein Arbeitsgerät zum Ankuppeln an eine selbstfahrende landwirtschaftliche Arbeitsmaschine, wie z.B. einen Traktor.

Aus EP 1 800 529 A1 ist z.B. ein solches Arbeitsgerät bekannt, welches ein Traggestell mit einer Mehrzahl von Kuppelelementen zum mechanischen Ankuppeln an die Arbeitsmaschine, ein Arbeitsorgan, das am Traggestell angelenkt ist, so dass das Arbeitsorgan zwischen einer Arbeitsstellung, in der das Arbeitsorgan abgesenkt ist, und einer Transportstellung verschwenkbar ist, in der das Arbeitsorgan aufgerichtet ist, einen Fluidzylinder, der eingerichtet ist, ein zwischen der Arbeitsstellung und der Transportstellung Verschwenken des Arbeitsorgans anzutreiben, einen ersten Fluidleitungsstrang, der eingerichtet ist, dem Fluidzylinder Druckfluid für eine Antriebsbewegung zum in Richtung der Arbeitsstellung Verschwenken des Arbeitsorgans zuzuführen, und einen zweiten Fluidleitungsstrang aufweist, der eingerichtet ist, dem Fluidzylinder Druckfluid für eine Antriebsbewegung zum in Richtung der Transportstellung Verschwenken des Arbeitsorgans zuzuführen.

Um zum Schützen von Antriebskomponenten des Arbeitsorgans ein aus der Arbeitsstellung Ausheben dessen an Vorgewenden einer Erntefläche zu begrenzen und das Arbeitsorgan in der Transportstellung gegen Abkippen zu sichern, weisen solche Arbeitsgeräte üblicherweise eine Sicherungsvorrichtung auf, die in eine Sicherungsstellung, in der die Sicherungsvorrichtung ein Verlagern des Arbeitsorgans aus der Arbeitsstellung und aus der Transportstellung begrenzt, und in eine Freigabestellung stellbar ist, in der die Sicherungsvorrichtung ein Verlagern des Arbeitsorgans aus der Arbeitsstellung und aus der Transportstellung nicht begrenzt.

Üblicherweise weist solch eine Sicherungsvorrichtung ein Hakenelement, das an seinen Längsenden jeweilige Haken hat und zwischen den Längsenden um eine Schwenkachse schwenkbar am Traggestell gelagert ist, und zwei Eingriffsbolzen auf, die am Arbeitsorgan vorgesehen sind, so dass in der Sicherungsstellung der Sicherungsvorrichtung und der Transportstellung des Arbeitsorgans der eine Eingriffsbolzen mit dem einen Haken in Eingriff stehend eine Verlagerung des Arbeitsorgans vollständig begrenzt bzw. sperrt und in der Sicherungsstellung der Sicherungsvorrichtung und einer Arbeitsstellung des Arbeitsorgans der andere Eingriffsbolzen mit dem anderen Haken in Eingriff bringbar ein Verlagern des Arbeitsorgans auf ein Ausheben bis zu einer Vorgewendestellung begrenzt.

Ein Stellen der Sicherungsvorrichtung von der Sicherungsstellung in die Freigabestellung wird dabei mittels eines Zugseils manuell realisiert. Dies ist für den Nutzer unkomfortabel und lenkt dessen Aufmerksamkeit von der Steuerung anderer Arbeitsvorgänge ab. Daher wäre es wünschenswert, das Stellen der Sicherungsvorrichtung zu vereinfachen. Dies wäre z.B. mittels einer Automatisierung möglich. Allerdings sollte eine solche Vereinfachung keine zusätzlichen Fluidsteuergeräte belegen und auch keine Steuerungselektronik erforderlich machen, um den Modifizierungsaufwand gering zu halten und die Störungsanfälligkeit des Fluidsystems nicht wesentlich zu erhöhen.

Der Erfindung liegt daher die Aufgabe zugrunde, ein Arbeitsgerät zum Ankuppeln an eine selbstfahrende landwirtschaftliche Arbeitsmaschine bereitzustellen, so dass bei möglichst geringem Modifizierungsaufwand und ohne wesentliche Erhöhung der Störungsanfälligkeit eine Vereinfachung des Stellens der Sicherungsvorrichtung erzielt wird.

Dies wird mit einem Arbeitsgerät gemäß Anspruch 1 erreicht. Weiterbildungen der Erfindung sind in den abhängigen Ansprüchen definiert.

Gemäß der Erfindung weist ein Arbeitsgerät zum Ankuppeln an eine landwirtschaftliche Arbeitsmaschine auf: ein Traggestell mit einer Mehrzahl von Kuppelelementen zum mechanischen Ankuppeln an die Arbeitsmaschine; ein Arbeitsorgan, das am Traggestell angelenkt ist, so dass das Arbeitsorgan zwischen einer Arbeitsstellung und einer Transportstellung verlagerbar ist; einen ersten Fluidzylinder, der eingerichtet ist, ein zwischen der Arbeitsstellung und der Transportstellung Verlagern des Arbeitsorgans anzutreiben; eine Sicherungsvorrichtung, die in eine Sicherungsstellung, in der die Sicherungsvorrichtung ein Verlagern des Arbeitsorgans aus der Arbeitsstellung und/oder aus der Transportstellung heraus begrenzt, und in eine Freigabestellung stellbar ist, in der die Sicherungsvorrichtung ein Verlagern des Arbeitsorgans aus der Arbeitsstellung und/oder aus der Transportstellung nicht begrenzt; wenigstens einen zweiten Fluidzylinder, der eingerichtet ist, ein Stellen der Sicherungsvorrichtung anzutreiben; sowie einen ersten und einen zweiten Fluidleitungsstrang, die jeweils eingerichtet sind, dem ersten Fluidzylinder zum Bewirken jeweiliger Antriebsbewegungen dessen Druckfluid zuzuführen; wobei ein Fluidleitungsstrang von den ersten und zweiten Fluidleitungssträngen eingerichtet ist, gleichzeitig mit einer Zufuhr von Druckfluid an den ersten Fluidzylinder auch dem zweiten Fluidzylinder zum Bewirken einer Antriebsbewegung dessen Druckfluid zuzuführen.

Dadurch, dass gemäß der Erfindung wenigstens ein zweiter Fluidzylinder vorgesehen ist, der eingerichtet ist, ein Stellen der Sicherungsvorrichtung anzutreiben, und einer von den ersten und zweiten Fluidleitungssträngen eingerichtet ist, gleichzeitig mit einer Zufuhr von Druckfluid an den ersten Fluidzylinder auch dem zweiten Fluidzylinder zum Bewirken einer Antriebsbewegung dessen Druckfluid zuzuführen, kann zumindest eine der Stellbewegungen der Sicherungsvorrichtung motorisch angetrieben und bevorzugt automatisiert werden, wodurch eine Vereinfachung des Stellens der Sicherungsvorrichtung erzielt wird. Dadurch, dass lediglich der zusätzliche zweite Fluidzylinder am Arbeitsgerät vorgesehen wird, welcher vorteilhaft einfach in den Druckfluidkreis des ersten Fluidzylinders eingebunden wird, hält sich der Modifizierungsaufwand in moderaten Grenzen und wird auch eine wesentliche Erhöhung der Störungsanfälligkeit vermieden. Außerdem kann durch diese erfindungsgemäße Einbindung ein Hydrauliksteuergerät eingespart werden, so dass am Schlepper bzw. Traktor ein Hydraulikanschluss für eine andere Funktion frei bleibt.

Gemäß der Erfindung kann das Traggestell z.B. als Dreipunktbock mit drei Eingriffsprofilen ausgebildet sein, welche mit drei korrespondierenden Fanghaken einer an einer Heckseite oder einer Frontseite der Arbeitsmaschine vorgesehenen Dreipunktaufnahme kuppelbar sind. Gemäß der Erfindung kann das Arbeitsorgan an einem Längsende des Traggestells angelenkt sein, so dass das Arbeitsorgan zwischen der Arbeitsstellung und der Transportstellung um eine sich quer zu einer Längsrichtung des Traggestells erstreckende Schwenkachse in Längsrichtung des Traggestells verschwenkbar ist. Die Schwenkachse kann sich dabei in einem Zustand, in dem das Arbeitsgerät an die Arbeitsmaschine angekuppelt ist, im Wesentlichen horizontal und in einer Längsrichtung bzw. Fahrtrichtung der Arbeitsmaschine erstrecken.

Gemäß der Erfindung kann die Arbeitsstellung eine Stellung sein, in der das Arbeitsorgan in eine im Wesentlichen horizontale Ausrichtung abgesenkt ist, so dass das Arbeitsorgan - wie beispielsweise ein Mähwerk - an der Bodenoberfläche entlang geführt wird und das Erntegut zur Bearbeitung erfasst. Die Transportstellung kann eine Stellung sein, in der das Arbeitsorgan in eine im Wesentlichen vertikale Ausrichtung aufgerichtet ist. Das Arbeitsorgan ist in der Transportstellung etwa 90 bis 150 Winkelgrade gegenüber der Horizontalen geneigt - vorzugsweise etwa 120 Winkelgrade.

Darüber hinaus kann eine Vorgewendestellung vorgesehen sein, in welcher das Arbeitsorgan gegenüber der Arbeitsstellung angehoben wird, damit es nicht mehr im Eingriff mit dem Erntegut bzw. der Bodenoberfläche steht. Die Vorgewendestellung wird in einem Randbereich eines Feldes (Vorgewende) eingenommen, in dem der Schlepper/Traktor für eine weitere Bearbeitungsreihe gewendet wird. In der Vorgewendestellung wird das Arbeitsorgan jedoch in der Regel nicht bis zur Transportstellung angehoben.

Gemäß der Erfindung können die ersten und zweiten Fluidzylinder bevorzugt jeweils auf hydraulischer Basis arbeiten und können demgemäß die ersten und zweiten Fluidleitungsstränge bevorzugt jeweils zum Leiten von Hydraulikfluid als Druckfluid eingerichtet sein.

Gemäß der Erfindung kann das durch die Sicherungsvorrichtung in der jeweiligen Sicherungsstellung realisierte Begrenzen einer Verlagerung des Arbeitsorgans sowohl das vollständige Begrenzen bzw. Sperren der Verlagerung als auch das Begrenzen der Verlagerung auf einen vorbestimmten Verlagerungsbereich umfassen. So kann beispielsweise vorgesehen sein, dass das Arbeitsorgan am Vorgewende nur bis zu einer vorbestimmten Aushubhöhe gegenüber der Arbeitsstellung angehoben werden kann, um die Zerstörung eines Gelenks einer sich drehenden Antriebswelle zu verhindern.

Durch das Sperren der Verlagerung in der Transportstellung mittels einer Klinke, kann der Hydraulikzylinder drucklos geschaltet werden, weil er keine Haltearbeit übernehmen muss und etwaige Stöße während einer Transportfahrt mechanisch abgefangen werden. Durch die mechanische Klinke ist die Transportstellung unabhängig von Leckagen, wie sie in Hydraulikkreisen zwangsläufig auftreten, gesichert.

Gemäß der Erfindung kann das Arbeitsgerät z.B. als bezüglich der Arbeitsmaschine seitenaufgehängtes Heckmähwerk ausgebildet sein und kann die Arbeitsmaschine z.B. als Traktor ausgebildet sein.

Gemäß einer Ausführungsform der Erfindung ist der erste Fluidleitungsstrang eingerichtet, dem ersten Fluidzylinder das Druckfluid für eine Antriebsbewegung zum in Richtung der Arbeitsstellung Verlagern des Arbeitsorgans zuzuführen, und eingerichtet, gleichzeitig mit einer Zufuhr von Druckfluid an den ersten Fluidzylinder auch einem zweiten Fluidzylinder zum Bewirken einer Antriebsbewegung dessen Druckfluid zuzuführen. Dabei ist der zweite Fluidleitungsstrang eingerichtet, dem ersten Fluidzylinder das Druckfluid für eine Antriebsbewegung zum in Richtung der Transportstellung Verlagern des Arbeitsorgans zuzuführen.

Gemäß einer weiteren Ausführungsform der Erfindung ist der erste Fluidleitungsstrang eingerichtet, gleichzeitig mit einer Zufuhr von Druckfluid an den ersten Fluidzylinder dem zweiten Fluidzylinder das Druckfluid für eine Antriebsbewegung zum in Richtung der Freigabestellung Stellen der Sicherungsvorrichtung zuzuführen. Durch diese Ausgestaltung der Erfindung wird vorteilhaft jene Stellbewegung der Sicherungsvorrichtung vereinfacht, bei welcher der Nutzer seine Aufmerksamkeit auch für die Steuerung des Verlagerns des Arbeitsorgans benötigt, und wird somit der Nutzer entlastet und die Arbeitssicherheit erhöht.

Gemäß einer weiteren Ausführungsform der Erfindung ist der zweite Fluidzylinder eingerichtet, auf Basis der Zufuhr des Druckfluids durch den ersten Fluidleitungsstrang lediglich ein Stellen der Sicherungsvorrichtung in Richtung zu einer von der Sicherungsstellung und der Freigabestellung anzutreiben, wobei das Arbeitsgerät außerdem Federmittel aufweist, welche eingerichtet sind, ein Stellen der Sicherungsvorrichtung in Richtung zu der anderen von der Sicherungsstellung und der Freigabestellung anzutreiben.

Mit dieser Ausgestaltung der Erfindung werden vorteilhaft beide Stellbewegungen der Sicherungsvorrichtung vereinfacht und damit der Nutzer entlastet und die Arbeitssicherheit erhöht. Zusätzlich wird der Modifizierungsaufwand im Druckfluidsystem weiter reduziert, da durch die Federmittel schon eine der Stellbewegungen realisiert wird und der zweite Fluidzylinder per Druckfluidbeaufschlagung nur die andere der Stellbewegungen zu realisieren braucht.

Bevorzugt ist der zweite Fluidzylinder eingerichtet, auf Basis der Zufuhr des Druckfluids durch den ersten Fluidleitungsstrang ein Stellen der Sicherungsvorrichtung in Richtung zur Freigabestellung anzutreiben, wobei die Federmittel eingerichtet sind, ein Stellen der Sicherungsvorrichtung in Richtung zur Sicherungsstellung anzutreiben.

Gemäß noch einer Ausführungsform der Erfindung weist der erste Fluidleitungsstrang einen Hauptstrang, der sich von einer Anschlussstelle zu einem Fluidsteuergerät bis zu einer Verzweigungsstelle erstreckt, sowie einen ersten Verzweigungsstrang, der sich von der Verzweigungsstelle bis zu einem Fluidanschluss zu einem Druckraum des ersten Fluidzylinders erstreckt, und einen zweiten Verzweigungsstrang auf, der sich von der Verzweigungsstelle bis zu einem Fluidanschluss zu einem Druckraum des zweiten Fluidzylinders erstreckt, wobei in dem zweiten Verzweigungsstrang erste Durchflusseinstellmittel vorgesehen sind, die derart eingerichtet sind, dass eine Durchflussmenge von Druckfluid in Richtung zum Druckraum des zweiten Fluidzylinders hin größer ist als eine Durchflussmenge von Druckfluid in Richtung vom Druckraum des zweiten Fluidzylinders weg.

Mit dieser Ausgestaltung der Erfindung wird vorteilhaft ermöglicht, dass bei Druckbeaufschlagung des ersten Fluidleitungsstrangs mit Druckfluid dieses mit hoher Durchflussmenge in den Druckraum des zweiten Fluidzylinders einströmt und damit schnell die Antriebsbewegung des zweiten Fluidzylinders bewirkt sowie mit geringer Durchflussmenge aus dem Druckraum des zweiten Fluidzylinders ausströmt und dadurch die per Druckbeaufschlagung mit Druckfluid erzielte Stellung der Sicherungsvorrichtung eine vorbestimmte Zeitdauer aufrechterhalten wird. Ist die per Druckbeaufschlagung mit Druckfluid erzielte Stellung der Sicherungsvorrichtung die Freigabestellung, so kann vorteilhaft eine Druckbeaufschlagung des ersten Fluidleitungsstrangs mit Druckfluid sowohl beim in die Transportstellung Verlagern des Arbeitsorgans als auch beim in die Arbeitsstellung Verlagern des Arbeitsorgans dafür genutzt werden, die Sicherungsvorrichtung in die Freigabestellung zu stellen und für die vorbestimmte Zeitdauer in der Freigabestellung zu halten.

Gemäß noch einer weiteren Ausführungsform der Erfindung sind in dem ersten Verzweigungsstrang zweite Durchflusseinstellmittel vorgesehen, die eingerichtet sind, eine Durchflussmenge von Druckfluid in Richtung vom Druckraum des ersten Fluidzylinders weg zu reduzieren, so dass bei einem in die Transportstellung Verlagern des Arbeitsorgans ein bewegungsverlangsamender Staudruck im Druckraum des ersten Fluidzylinders entsteht.

Auf diese Weise wird vorteilhaft für das in die Arbeitsstellung Verlagern des Arbeitsorgans eine Endlagendämpfung bereitgestellt, womit störende Anschlagimpulse vermieden werden und damit der Verschleiß reduziert wird und der Nutzungskomfort erhöht wird. Da die zweiten Durchflusseinstellmittel vor der Verzweigungsstelle zum zweiten Fluidzylinder angeordnet sind, wird vorteilhaft vermieden, dass der Staudruck an den Druckraum des zweiten Fluidzylinders übertragen wird und eine unbeabsichtigte Antriebsbewegung dessen bewirkt.

Gemäß einer weiteren Ausführungsform der Erfindung sind in dem Hauptstrang dritte Durchflusseinstellmittel vorgesehen, die derart eingerichtet sind, dass eine Durchflussmenge von Druckfluid von der Anschlussstelle zu dem Fluidsteuergerät in Richtung zur Verzweigungsstelle des ersten Fluidleitungsstrangs hin kleiner ist als eine Durchflussmenge von Druckfluid von der Verzweigungsstelle in Richtung zur Anschlussstelle zu dem Fluidsteuergerät hin.

Mit dieser Ausgestaltung der Erfindung wird vorteilhaft ermöglicht, dass bei Druckbeaufschlagung des ersten Fluidleitungsstrangs mit Druckfluid dieses mit reduzierter Durchflussmenge zu der Verzweigungsstelle hinströmt, wodurch bei unbeabsichtigten kurzen Druckimpulsen auf den ersten Fluidleitungsstrang eine unbeabsichtigte Antriebsbewegung des zweiten Fluidzylinders vermieden werden kann. Im Gegenzug kann das Druckfluid mit höherer Durchflussmenge von der Verzweigungsstelle abströmen, so dass das Entstehen eines Staudrucks im zweiten Verzweigungsstrang und damit eine unbeabsichtigte Antriebsbewegung des zweiten Fluidzylinders vermieden werden kann.

Gemäß noch einer Ausführungsform der Erfindung ist ein Reduzierungsmaß der zweiten Durchflusseinstellmittel für eine Durchflussmenge von Druckfluid in Richtung weg von dem Druckraum des ersten Fluidzylinders gleich einem Reduzierungsmaß der dritten Durchflusseinstellmittel für eine Durchflussmenge von Druckfluid von der Anschlussstelle zu dem Fluidsteuergerät in Richtung zur Verzweigungsstelle des ersten Fluidleitungsstrangs hin. Mit anderen Worten sind die zweiten und dritten Durchflusseinstellmittel aufeinander abgestimmt.

Gemäß noch einer weiteren Ausführungsform der Erfindung sind die dritten Durchflusseinstellmittel derart eingerichtet, dass eine Durchflussmenge von Druckfluid von der Verzweigungsstelle in Richtung zur Anschlussstelle zu dem Fluidsteuergerät hin maximal ist. Damit wird sichergestellt, dass insbesondere aus dem Druckraum des ersten Fluidzylinders ausströmendes Druckfluid ohne Erzeugung eines Staudrucks in den Verzweigungssträngen in den Hauptstrang abströmen kann. Damit kann eine unbeabsichtigte Antriebsbewegung des zweiten Fluidzylinders vermieden werden.

Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung - soweit dies technisch sinnvoll ist - beliebig miteinander kombiniert sein können.

Im Folgenden wird die Erfindung anhand einer bevorzugten Ausführungsform und unter Bezugnahme auf die beigefügten Figuren detaillierter beschrieben.
- Fig. 1: zeigt eine seitliche Teilansicht eines gemäß einer Ausführungsform der Erfindung ausgebildeten Arbeitsgerätes zum Ankuppeln an eine landwirtschaftliche Arbeitsmaschine.
- Fig. 2: zeigt ein Schaltbild eines Fluidsystems des Arbeitsgerätes von Fig. 1 und ein Fluidsteuergerät der Arbeitsmaschine.

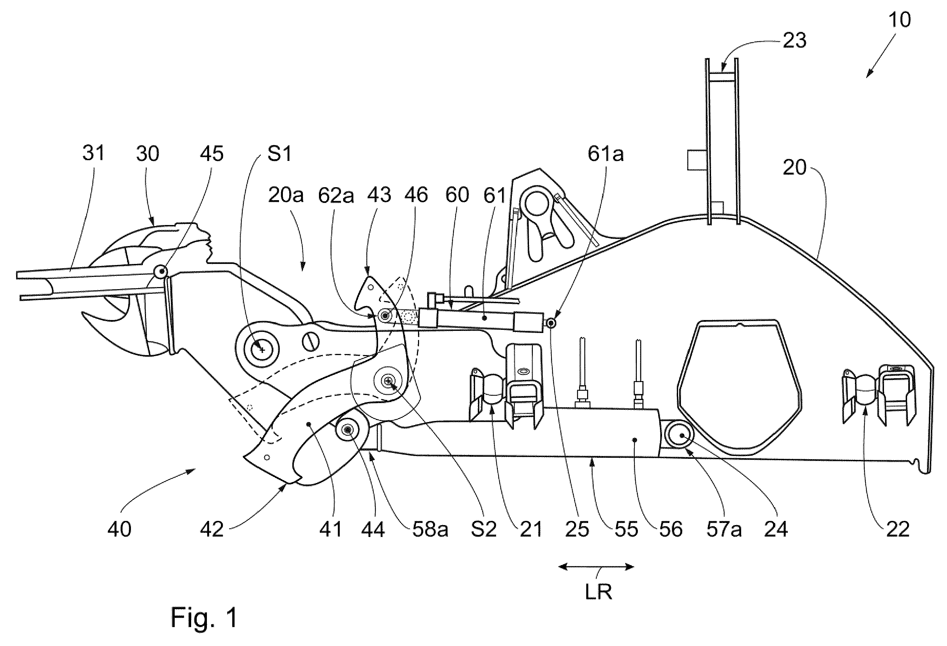

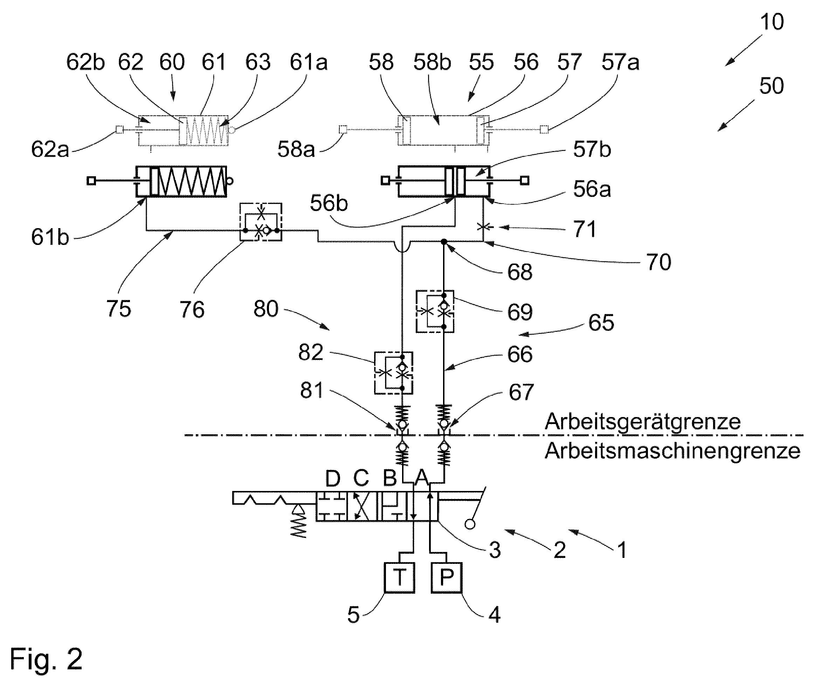

Im Folgenden wird unter Bezugnahme auf die Figuren 1 und 2 ein gemäß einer Ausführungsform der Erfindung ausgebildetes Arbeitsgerät 10 zum Ankuppeln an eine selbstfahrende landwirtschaftliche Arbeitsmaschine 1 beschrieben werden.

Gemäß der hier beschriebenen Ausführungsform der Erfindung ist die Arbeitsmaschine 1 als Traktor ausgebildet, welcher an seiner Heckseite (nicht gezeigt) eine Dreipunktaufnahme mit drei Fanghaken aufweist.

Das Arbeitsgerät 10 ist als bezüglich der Arbeitsmaschine 1 seitenaufgehängtes Heckmähwerk ausgebildet und weist ein Traggestell 20, ein Arbeitsorgan 30, eine Sicherungsvorrichtung 40 und ein Fluidsystem 50 zum Betreiben des Arbeitsgerätes 10 unter Zusammenwirkung mit einem Fluidsystem 2 der Arbeitsmaschine 1 auf.

Das Traggestell 20 ist als Dreipunktbock ausgebildet und weist eine Mehrzahl von jeweils in Form eines Eingriffsprofils ausgebildeten Kuppelelementen 21, 22, 23 auf, die zum mechanischen Ankuppeln an die Dreipunktaufnahme der Arbeitsmaschine 1 mit den Fanghaken der Dreipunktaufnahme in Eingriff bringbar bzw. kuppelbar sind.

Das Arbeitsorgan 30 ist am Traggestell 20 angelenkt, so dass das Arbeitsorgan 30 zwischen einer Arbeitsstellung und einer Transportstellung verlagerbar ist, wobei es auch eine Vorgewendestellung als Zwischenstellung zwischen diesen Extremen einnehmen kann. Genauer ist das Arbeitsorgan 30 an einem Längsende 20a des Traggestells 20 angelenkt, so dass das Arbeitsorgan 30 zwischen der Arbeitsstellung und der Transportstellung um eine sich quer zu einer Längsrichtung LR des Traggestells 20 erstreckende Schwenkachse S1 in Längsrichtung LR des Traggestells 20 verschwenkbar ist. Die Schwenkachse S1 erstreckt sich dabei in einem Zustand, in dem das Arbeitsgerät 10 an die Arbeitsmaschine 1 angekuppelt ist, im Wesentlichen horizontal und in einer Längsrichtung bzw. Fahrtrichtung der Arbeitsmaschine 1.

Das Arbeitsorgan 30 weist einen Ausleger 31, über den das Arbeitsorgan 30 um die Schwenkachse S1 schwenkbar am Traggestell 20 angelenkt ist, und einen Mähbalken (nicht dargestellt) auf, welcher an dem Ausleger 31 angelenkt ist und welcher zum Mähen von z.B. Gras eingerichtet ist.

Gemäß dieser Ausführungsform der Erfindung ist die Arbeitsstellung eine Stellung, in der das Arbeitsorgan 30 in eine im Wesentlichen horizontale Ausrichtung abgesenkt ist sowie an der Bodenoberfläche entlang geführt wird bzw. im Eingriff mit dem Erntegut steht. Die Transportstellung ist eine Stellung, in der das Arbeitsorgan 30 in eine im Wesentlichen vertikale Ausrichtung aufgerichtet ist und das Gespann Außenmaße einnimmt, mit welchen eine Transportfahrt möglich ist bzw. auf öffentlichen Straße zugelassen ist.

Die Vorgewendestellung ist eine Stellung, in die das Arbeitsorgan 30 an Vorgewenden einer Erntefläche verbracht wird und in der das Arbeitsorgan 30 aus der Arbeitsstellung heraus um einen vorbestimmten geringen Schwenkwinkel aus der Horizontalen in Richtung zur Transportstellung ausgehoben ist, damit es nicht mehr mit der Bodenoberfläche bzw. dem Erntgut in Eingriff steht.

Die Sicherungsvorrichtung 40 ist so ausgebildet, dass sie in eine Sicherungsstellung (in Fig. 1 in Volllinie dargestellt), in der die Sicherungsvorrichtung 40 ein Verlagern des Arbeitsorgans 30 aus der Arbeitsstellung und aus der Transportstellung begrenzt, und in eine Freigabestellung (in Fig. 1 in Strichlinie dargestellt) stellbar ist, in der die Sicherungsvorrichtung 40 ein Verlagern des Arbeitsorgans 30 aus der Arbeitsstellung und aus der Transportstellung nicht begrenzt.

Genauer weist die Sicherungsvorrichtung 40 ein längliches Hakenelement 41, das an seinen Längsenden jeweilige Haken 42, 43 hat und das zwischen den Längsenden um eine Schwenkachse S2 schwenkbar am Traggestell 20 gelagert ist, und zwei Eingriffsbolzen 44, 45 auf, die am Ausleger 31 des Arbeitsorgans 30 vorgesehen sind, so dass in der Sicherungsstellung der Sicherungsvorrichtung 40 und der Transportstellung des Arbeitsorgans 30 der eine Eingriffsbolzen 45 mit dem einen Haken 43 in Eingriff stehend eine Verlagerung des Arbeitsorgans 30 vollständig begrenzt bzw. sperrt und in der Sicherungsstellung der Sicherungsvorrichtung 40 und der Arbeitsstellung des Arbeitsorgans 30 der andere Eingriffsbolzen 44 mit dem anderen Haken 42 in Eingriff bringbar ein Verlagern des Arbeitsorgans 30 auf ein Ausheben bis zu einer Vorgewendestellung (in Fig. 1 gezeigt) begrenzt.

Gemäß dieser Ausführungsform der Erfindung ist die Vorgewendestellung eine Stellung, in die das Arbeitsorgan 30 an Vorgewenden einer Erntefläche verbracht wird und in der das Arbeitsorgan 30 aus der Arbeitsstellung heraus um einen vorbestimmten geringen Schwenkwinkel aus der Horizontalen in Richtung zur Transportstellung ausgehoben ist.

Das Fluidsystem 50 des Arbeitsgerätes 10 ist als hydraulisches Fluidsystem bzw. Hydrauliksystem ausgebildet und weist einen ersten Fluidzylinder 55, einen zweiten Fluidzylinder 60, einen ersten Fluidleitungsstrang 65 und einen zweiten Fluidleitungsstrang 80 auf.

Die ersten und zweiten Fluidzylinder 55, 60 arbeiten jeweils auf hydraulischer Basis, und die ersten und zweiten Fluidleitungsstränge 65, 80 sind jeweils zum Leiten von Hydraulikfluid wie Hydrauliköl als Druckfluid eingerichtet.

Der erste Fluidzylinder 55 ist eingerichtet, als Aushubzylinder fungierend ein zwischen der Arbeitsstellung, der Vorgewendestellung und der Transportstellung Verlagern bzw. Verschwenken des Arbeitsorgans 30 anzutreiben. Zu diesem Zweck weist der erste Fluidzylinder 55 ein Zylindergehäuse 56, einen ersten Kolben 57, der im Zylindergehäuse 56 angeordnet ist und der eine daran angebrachte in einem Befestigungsauge 57a endende Kolbenstange hat, und einen zweiten Kolben 58 auf, der im Zylindergehäuse 56 angeordnet ist und der eine daran angebrachte in einem Befestigungsauge 58a endende Kolbenstange hat. Das Befestigungsauge 57a der Kolbenstange des ersten Kolbens 57 ist an dem Traggestell 20 über einen Anlenkbolzen 24 angelenkt, und das Befestigungsauge 58a der Kolbenstange des zweiten Kolbens 58 ist an dem Ausleger 31 des Arbeitsorgans 30 über einen Anlenkbolzen 44 angelenkt.

Zwischen dem ersten Kolben 57 und einem Bodenabschnitt des Zylindergehäuses 56 des ersten Fluidzylinders 55 ist ein erster Druckraum 57b definiert, welcher über einen ersten Fluidanschluss 56a am Zylindergehäuse 56 mit Druckfluid befüllbar ist (selbstverständlich kann das Druckfluid über den ersten Fluidanschluss 56a auch wieder aus dem ersten Druckraum 57b austreten). Zwischen dem ersten Kolben 57 und dem zweiten Kolben 58 des ersten Fluidzylinders 55 ist ein zweiter Druckraum 58b definiert, welcher über einen zweiten Fluidanschluss 56b am Zylindergehäuse 56 mit Druckfluid befüllbar ist (selbstverständlich kann das Druckfluid über den zweiten Fluidanschluss 56b auch wieder aus dem zweiten Druckraum 58b austreten).

Mit Bezug auf Fig. 2 ist hier zu bemerken, dass in dieser der erste Fluidzylinder 55 einmal in Volllinie nach Erreichen der Arbeitsstellung mit druckfluidbefülltem erstem Druckraum 57b und druckfluidentleertem zweitem Druckraum 58b dargestellt ist und darüber ein zweites Mal in Strichlinie nach Erreichen der Transportstellung mit druckfluidbefülltem zweitem Druckraum 58b und druckfluidentleertem erstem Druckraum 57b dargestellt ist.

Der zweite Fluidzylinder 60 ist als einfachwirkender Fluidzylinder ausgebildet und eingerichtet, ein Stellen der Sicherungsvorrichtung 40 zwischen der Sicherungsstellung und der Freigabestellung anzutreiben. Zu diesem Zweck weist der zweite Fluidzylinder 60 ein Zylindergehäuse 61 an dessen einen Längsende ein Befestigungsauge 61 a angeformt ist, einen Kolben 62, der im Zylindergehäuse 61 angeordnet ist und der eine daran angebrachte in einem Befestigungsauge 62a endende Kolbenstange hat, und Federmittel 63 in Form einer Schraubendruckfeder auf, die im Zylindergehäuse 61 zwischen einem Bodenabschnitt des Zylindergehäuses 61 und dem Kolben 62 des zweiten Fluidzylinders 60 angeordnet sind und die den Kolben 62 in Richtung zu einer Ausgefahrenstellung der Kolbenstange hin vorspannen. Das Befestigungsauge 61a des Zylindergehäuses 61 ist an dem Traggestell 20 über einen Anlenkbolzen 25 angelenkt, und das Befestigungsauge 62a der Kolbenstange des Kolbens 62 ist an dem Hakenelement 41 der Sicherungsvorrichtung 40 über einen Anlenkbolzen 46 angelenkt. Statt einer Schraubendruckfeder können selbstverständlich auch andere Federmittel 63 vorgesehen werden, wie beispielsweise auch Druckspeicher oder ähnliches.

Zwischen dem Kolben 62 und einem Bodenabschnitt des Zylindergehäuses 61 des zweiten Fluidzylinders 60 ist ein Druckraum 62b definiert, welcher über einen Fluidanschluss 61 b am Zylindergehäuse 61 mit Druckfluid befüllbar ist (selbstverständlich kann das Druckfluid über den Fluidanschluss 61 b auch wieder aus dem Druckraum 62b austreten).

Mit Bezug auf Fig. 2 ist hier zu bemerken, dass in dieser der zweite Fluidzylinder 60 einmal in Volllinie kurz vor Erreichen der zur Sicherungsstellung korrespondierenden Ausgefahrenstellung mit fast druckfluidentleertem Druckraum 62b und fast vollständig ausgedehnten Federmitteln 63 dargestellt ist und darüber ein zweites Mal in Strichlinie nach Erreichen der zur Freigabestellung korrespondierenden Eingefahrenstellung mit druckfluidbefülltem Druckraum 62b und fast vollständig zusammengedrückten Federmitteln 63 dargestellt ist.

Der erste Fluidleitungsstrang 65 und der zweite Fluidleitungsstrang 80 sind jeweils eingerichtet, dem ersten Fluidzylinder 55 zum Bewirken jeweiliger Antriebsbewegungen dessen Druckfluid zuzuführen. Zudem ist der erste Fluidleitungsstrang 65 eingerichtet, gleichzeitig mit einer Zufuhr von Druckfluid an den ersten Fluidzylinder 55 auch dem zweiten Fluidzylinder 60 zum Bewirken einer Antriebsbewegung dessen Druckfluid zuzuführen.

Genauer weist der erste Fluidleitungsstrang 65 einen Hauptstrang 66, einen ersten Verzweigungsstrang 70 und einen zweiten Verzweigungsstrang 75 auf. Der Hauptstrang 66 erstreckt sich von einer Anschlussstelle 67 zu einem Fluidsteuergerät 3 des Fluidsystems 2 der Arbeitsmaschine 1 bis zu einer Verzweigungsstelle 68. Der erste Verzweigungsstrang 70 erstreckt sich von der Verzweigungsstelle 68 bis zu dem ersten Fluidanschluss 56a zu dem ersten Druckraum 57b des ersten Fluidzylinders 55. Der zweite Verzweigungsstrang 75 erstreckt sich von der Verzweigungsstelle 68 bis zu dem Fluidanschluss 61 b zu dem Druckraum 62b des zweiten Fluidzylinders 60. Der zweite Fluidleitungsstrang 80 erstreckt sich seinerseits von einer Anschlussstelle 81 zu dem Fluidsteuergerät 3 des Fluidsystems 2 der Arbeitsmaschine 1 bis zu dem zweiten Fluidanschluss 56b zu dem zweiten Druckraum 58b des ersten Fluidzylinders 55.

Wenn sich das Arbeitsorgan 30 in der Transportstellung befindet und das doppeltwirkende Fluidsteuergerät 3 der Arbeitsmaschine 1 auf die in Fig. 1 gezeigte Schaltstellung A gestellt wird, so wird dem ersten Fluidleitungsstrang 65 über die Anschlussstelle 67 Druckfluid von einer Fluidpumpe 4 des Fluidsystems 2 der Arbeitsmaschine 1 zugeführt. Dieses Druckfluid wird dann über den ersten Fluidanschluss 56a dem ersten Druckraum 57b des ersten Fluidzylinders 55 zugeführt, wodurch die Kolbenstange des ersten Kolbens 57 des ersten Fluidzylinders 55 einfährt und damit am Anlenkbolzen 44 eine Zugbewegung bzw. Zugkraft auf den Ausleger 31 des Arbeitsorgans 30 ausübt. Diese Zugbewegung bzw. Zugkraft wirkt so, dass der Ausleger 31 des Arbeitsorgans 30 zum um die Schwenkachse S1 Schwenken in Richtung der Arbeitsstellung angetrieben wird. Demgemäß ist der erste Fluidleitungsstrang 65 eingerichtet, dem ersten Druckraum 57b des ersten Fluidzylinders 55 das Druckfluid für eine Antriebsbewegung zum in Richtung der Arbeitsstellung Verlagern bzw. Verschwenken des Arbeitsorgans 30 zuzuführen.

In der Schaltstellung A des Fluidsteuergeräts 3 ist außerdem der zweite Fluidleitungsstrang 80 mit einem Fluidrücklauftank 5 des Fluidsystems 2 der Arbeitsmaschine 1 verbunden, so dass im zweiten Druckraum 58b des ersten Fluidzylinders 55 befindliches Druckfluid in den Fluidrücklauftank 5 abströmen kann.

In der Schaltstellung A des Fluidsteuergeräts 3 wird außerdem dem Druckraum 62b des zweiten Fluidzylinders 60 über den ersten Fluidleitungsstrang 65

Druckfluid von der Fluidpumpe 4 des Fluidsystems 2 der Arbeitsmaschine 1 zugeführt, wodurch die Kolbenstange des Kolbens 62 des zweiten Fluidzylinders 60 gegen die Federkraft der Federmittel 63 einfährt und damit am Anlenkbolzen 46 eine Zugbewegung bzw. Zugkraft auf das Hakenelement 41 der Sicherungsvorrichtung 40 ausübt. Diese Zugbewegung bzw. Zugkraft wirkt so, dass das Hakenelement 41 der Sicherungsvorrichtung 40 zum um die Schwenkachse S2 Schwenken in Richtung der Freigabestellung angetrieben wird. Demgemäß ist der erste Fluidleitungsstrang 65 eingerichtet, gleichzeitig mit der Zufuhr von Druckfluid an den ersten Druckraum 57b des ersten Fluidzylinders 55 auch dem Druckraum 62b des zweiten Fluidzylinders 60 zum Bewirken einer Antriebsbewegung dessen Druckfluid zuzuführen, d.h. dem Druckraum 62b des zweiten Fluidzylinders 60 das Druckfluid für eine Antriebsbewegung zum in Richtung der Freigabestellung Stellen des Hakenelements 41 der Sicherungsvorrichtung 40 zuzuführen.

Der zweite Fluidzylinder 60 ist dabei eingerichtet, auf Basis der Zufuhr des Druckfluids durch den ersten Fluidleitungsstrang 65 lediglich ein Stellen des Hakenelements 41 der Sicherungsvorrichtung 40 in Richtung zu der Freigabestellung anzutreiben, wobei die Federmittel 63 des zweiten Fluidzylinders 60 eingerichtet sind, ein Ausfahren der Kolbenstange des Kolbens 62 des zweiten Fluidzylinders 60 und damit ein Stellen des Hakenelements 41 der Sicherungsvorrichtung 40 in Richtung zur Sicherungsstellung anzutreiben.

Wenn sich das Arbeitsorgan 30 in der Arbeitsstellung befindet und das doppeltwirkende Fluidsteuergerät 3 der Arbeitsmaschine 1 auf die in Fig. 1 gezeigte Schaltstellung C gestellt wird, so wird dem zweiten Fluidleitungsstrang 80 über die Anschlussstelle 81 Druckfluid von der Fluidpumpe 4 des Fluidsystems 2 der Arbeitsmaschine 1 zugeführt. Dieses Druckfluid wird dann über den zweiten Fluidanschluss 56b dem zweiten Druckraum 58b des ersten Fluidzylinders 55 zugeführt, wodurch die Kolbenstangen der ersten und zweiten Kolben 57, 58 des ersten Fluidzylinders 55 ausfahren und damit am Anlenkbolzen 44 eine Schubbewegung bzw. Schubkraft auf den Ausleger 31 des Arbeitsorgans 30 ausüben. Diese Schubbewegung bzw. Schubkraft wirkt so, dass der Ausleger 31 des Arbeitsorgans 30 zum um die Schwenkachse S1 Schwenken in Richtung der Transportstellung angetrieben wird. Demgemäß ist der zweite Fluidleitungsstrang 80 eingerichtet, dem zweiten Druckraum 58b des ersten Fluidzylinders 55 das Druckfluid für eine Antriebsbewegung zum in Richtung der Transportstellung Verlagern bzw. Verschwenken des Arbeitsorgans 30 zuzuführen.

In der Schaltstellung C des Fluidsteuergeräts 3 ist außerdem der erste Fluidleitungsstrang 65 mit dem Fluidrücklauftank 5 des Fluidsystems 2 der Arbeitsmaschine 1 verbunden, so dass im ersten Druckraum 57b des ersten Fluidzylinders 55 befindliches Druckfluid und auch im Druckraum 62b des zweiten Fluidzylinders 60 befindliches Druckfluid in den Fluidrücklauftank 5 abströmen kann.

Ferner sind in der Schaltstellung B (Schwimmstellung) des Fluidsteuergeräts 3 sowohl der erste Fluidleitungsstrang 65 als auch der zweite Fluidleitungsstrang 80 mit dem Fluidrücklauftank 5 des Fluidsystems 2 der Arbeitsmaschine 1 verbunden, so dass jegliches Druckfluid aus diesen in den Fluidrücklauftank 5 abströmen kann. Zudem sind in der Schaltstellung D des Fluidsteuergeräts 3 sowohl der erste Fluidleitungsstrang 65 als auch der zweite Fluidleitungsstrang 80 gegen die Zufuhr und gegen die Abfuhr von Druckfluid gesperrt.

Weitere Einzelheiten zur grundsätzlichen Funktionsweise des als Aushubzylinder wirkenden ersten Fluidzylinders 55 beim Verlagern des Arbeitsorgans 30 zwischen der Arbeitsstellung und der Transportstellung können aus dem eingangsgenannten Dokument EP 1 800 529 A1 entnommen werden.

Im Folgenden wird nun detailliert das Zusammenspiel von erstem und zweitem Fluidzylinder 55, 60 beim Verlagern des Arbeitsorgans 30 zwischen der Transportstellung und der Arbeitsstellung beschrieben werden.

Wenn sich das Arbeitsorgan 30 in der Transportstellung befindet, befindet sich die Sicherungsvorrichtung 40 in der Sicherungsstellung (die Sicherungsstellung des Hakenelements 41 ist in Fig. 1 in Volllinie dargestellt), in der der in Fig. 1 obere Eingriffsbolzen 45 des Auslegers 31 des Arbeitsorgans 30 mit dem in Fig. 1 oberen Haken 43 in Eingriff stehend eine Verlagerung des Arbeitsorgans 30 vollständig begrenzt bzw. sperrt. Die Federmittel 63 des zweiten Fluidzylinders 60 halten dabei im drucklosen Zustand des zweiten Fluidzylinders 60 dessen Kolbenstange ausgefahren, so dass der als Klinke fungierende obere Haken 43 des Hakenelements 41 in der Sicherungsstellung den Eingriffsbolzen 45 verriegelt.

Wenn das Arbeitsorgan 30 nun aus der Transportstellung in die Arbeitsstellung abgesenkt bzw. abgeklappt werden soll, wird das doppeltwirkende Fluidsteuergerät 3 der Arbeitsmaschine 1 auf die in Fig. 2 gezeigte Schaltstellung A gestellt. Dadurch wird der erste Druckraum 57b des ersten Fluidzylinders 55 mit Druckfluid beaufschlagt, was eine Einfahrbewegung der Kolbenstange des ersten Kolbens 57 des ersten Fluidzylinders 55 bewirkt. Gleichzeitig wird auch der Druckraum 62b des zweiten Fluidzylinders 60 mit Druckfluid beaufschlagt, was eine Einfahrbewegung der Kolbenstange des Kolbens 60 des zweiten Fluidzylinders 60 und damit ein im Uhrzeigersinn um die Schwenkachse S2 Verschwenken des Hakenelements 41 in die Freigabestellung (die Freigabestellung des Hakenelements 41 ist in Fig. 1 in Strichlinie dargestellt) bewirkt. Damit ist ein absenkendes entgegen dem Uhrzeigersinn um die Schwenkachse S1 Verschwenken des Arbeitsorgans 30 freigegeben und das Arbeitsorgan 30 schwenkt zuerst angetrieben durch die Einfahrbewegung der Kolbenstange des ersten Kolbens 57 des ersten Fluidzylinders 55 und nachfolgend angetrieben durch die Schwerkraft und gebremst durch die Verdrängung von Druckfluid aus dem zweiten Druckraum 58b des ersten Fluidzylinders 55 nach unten in die Arbeitsstellung.

Wird das Fluidsteuergerät 3 der Arbeitsmaschine 1 dann auf die in Fig. 1 gezeigte Schaltstellung (Schwimmstellung) B gestellt, fährt die Kolbenstange des Kolbens 62 des zweiten Fluidzylinders 60 angetrieben durch die Federmittel 63 wieder aus, wodurch das Hakenelement 41 der Sicherungsvorrichtung 40 um die Schwenkachse S2 entgegen dem Uhrzeigersinn wieder in die Sicherungsstellung geschwenkt wird.

Wird nun das Fluidsteuergerät 3 der Arbeitsmaschine 1 auf die in Fig. 2 gezeigte Schaltstellung C gestellt, wird der zweite Druckraum 58b des ersten Fluidzylinders 55 mit Druckfluid beaufschlagt, was unter Verdrängung von Druckfluid aus dem ersten Druckraum 57b des ersten Fluidzylinders 55 jeweilige Ausfahrbewegungen der Kolbenstangen des ersten und des zweiten Kolbens 57, 58 des ersten Fluidzylinders 55 bewirkt. Dadurch schwenkt das Arbeitsorgan 30 um die Schwenkachse S1 im Uhrzeigersinn nach oben, bis der in Fig. 1 untere Eingriffsbolzen 44 in der Vorgewendestellung des Arbeitsorgans 30 mit dem in Fig. 1 unteren als Vorgewendeklinke fungierenden Haken 42 des Hakenelements 41 in Eingriff gelangt und dadurch ein weiteres Ausheben des Arbeitsorgans 30 mechanisch begrenzt bzw. sperrt. Dadurch wird verhindert, dass eine als Gelenkwelle ausgeführte Antriebswelle während des Betriebs zu weit gebeugt bzw. angewinkelt und dadurch beschädigt wird.

Wenn das Arbeitsorgan 30 nun aus der Arbeitsstellung oder der Vorgewendestellung in die Transportstellung hochgestellt bzw. hochgeklappt werden soll, wird das doppeltwirkende Fluidsteuergerät 3 der Arbeitsmaschine 1 zum Überfahren der Vorgewendestellung zuerst kurzzeitig auf die in Fig. 2 gezeigte Schaltstellung A gestellt, damit die Kolbenstange des Kolbens 62 des zweiten Fluidzylinders 60 einfährt und das Hakenelement 41 der Sicherungsvorrichtung 40 im Uhrzeigersinn um die Schwenkachse S2 in die Freigabestellung verschwenkt.

Ein vorteilhafter Effekt der erfindungsgemäßen Verschaltung des Fluidsystems 50 des Arbeitsgerätes liegt dabei darin, dass das Druckfluid mit hoher Durchflussmenge in den Druckraum 62b des zweiten Fluidzylinders 60 einfährt, aber in der anderen Richtung nur langsam über im zweiten Verzweigungsstrang 75 vorgesehene erste Durchflusseinstellmittel 76 wie eine Drosselblende wieder ausströmt. Diese Zeitverzögerung wird dann vom Bediener der Arbeitsmaschine 1 genutzt, um das Fluidsteuergerät 3 der Arbeitsmaschine 1 zügig wieder auf Heben, d.h. auf die in Fig. 1 gezeigte Schaltstellung C, zu schalten und den Vorgewendebegrenzungspunkt zu überfahren.

Mit anderen Worten sind zum Erzielen der gewünschten Zeitverzögerung die ersten Durchflusseinstellmittel 76 im zweiten Verzweigungsstrang 75 derart eingerichtet, dass eine Durchflussmenge von Druckfluid in Richtung zum Druckraum 62b des zweiten Fluidzylinders 60 hin größer ist als eine Durchflussmenge von Druckfluid in Richtung vom Druckraum 62b des zweiten Fluidzylinders 60 weg.

Beim um die Schwenkachse S1 in die Transportstellung Hochschwenken des Arbeitsorgans 30 drückt dann der in Fig. 1 obere Eingriffsbolzen 45 des Auslegers 31 des Arbeitsorgans 30 automatisch die Kolbenstange des drucklosen Kolbens 62 des zweiten Fluidzylinders 60 gegen die Federwirkung der Federmittel 63 zurück, so dass durch im Uhrzeigersinn um die Schwenkachse S2 Verschwenken des Hakenelements 41 der obere Eingriffsbolzen 45 über die nach unten vorstehende Spitze des in Fig. 1 oberen Hakens 43 des Hakenelements 41 schnappen kann. Bei Erreichen der Endlage bzw. der Transportstellung wird dann das Hakenelement 41 durch die Federwirkung der Federmittel 63 gegen den Uhrzeigersinn um die Schwenkachse S2 verschwenkt, so dass der als Klinke fungierende obere Haken 43 des Hakenelements 41 in der Sicherungsstellung mit dem Eingriffsbolzen 45 verriegelt wird.

Um beim in die Transportstellung Hochschwenken des Arbeitsorgans 30 eine Endlagendämpfung bereitzustellen, sind im ersten Verzeigungsstrang 70 des ersten Fluidleitungsstrangs 65 zweite Durchflusseinstellmittel 71 in Form von z.B. einer Drosselblende vorgesehen, die eingerichtet sind, eine Durchflussmenge von Druckfluid in Richtung vom ersten Druckraum 57b des ersten Fluidzylinders 55 weg zu reduzieren, so dass beim unter Verdrängung von Druckfluid aus dem ersten Druckraum 57b des ersten Fluidzylinders 55 in die Transportstellung Verlagern des Arbeitsorgans 30 ein bewegungsverlangsamender Staudruck im ersten Druckraum 57b des ersten Fluidzylinders 55 entsteht. Die zweiten Durchflusseinstellmittel 71 sind dabei vorteilhaft so angeordnet, dass der Staudruck des Druckfluids vor der Verzweigungsstelle 68 zum zweiten Fluidzylinder 60 abgefangen wird, damit dieser nicht durch den Staudruck einfährt.

Um sicherzustellen, dass beim Durchfahren der Schwimmstellung bzw. Schaltstellung B des Fluidsteuergeräts 3 zum Absenken des Arbeitsorgans 30 aus der Vorgewendestellung ein kurzer Druckimpuls vom Fluidsteuergerät 3 im ersten Fluidleitungsstrang 65 nicht den zweiten Fluidzylinder 60 druckfluidbetätigt und damit das Hakenelement 41 unbeabsichtigt in die Freigabestellung verschwenkt, sind im Hauptstrang 66 des ersten Fluidleitungsstrangs 65 dritte Durchflusseinstellmittel 69 in Form von z.B. einer Drosselblende vorgesehen, die derart eingerichtet sind, dass eine Durchflussmenge von Druckfluid von der Anschlussstelle 67 zum Fluidsteuergerät 3 in Richtung zur Verzweigungsstelle 68 des ersten Fluidleitungsstrangs 65 hin kleiner ist als eine Durchflussmenge von Druckfluid von der Verzweigungsstelle 68 in Richtung zur Anschlussstelle 67 zum Fluidsteuergerät 3 hin.

Bevorzugt ist dabei ein Reduzierungsmaß (wie z.B. eine Nennweite der Blende) der zweiten Durchflusseinstellmittel 71 für eine Durchflussmenge von Druckfluid in Richtung weg von dem ersten Druckraum 57b des ersten Fluidzylinders 55 gleich einem Reduzierungsmaß (wie z.B. eine Nennweite der Blende) der dritten Durchflusseinstellmittel 69 für eine Durchflussmenge von Druckfluid von der Anschlussstelle 67 zum Fluidsteuergerät 3 in Richtung zur Verzweigungsstelle 68 des ersten Fluidleitungsstrangs 65 hin.

Damit im ersten Fluidleitungsstrang 65 kein Staudruck entsteht, der den zweiten Fluidzylinder 60 druckfluidbetätigt und damit das Hakenelement 41 unbeabsichtigt in die Freigabestellung verschwenkt, sind die dritten Durchflusseinstellmittel 69 außerdem derart eingerichtet, dass eine Durchflussmenge von Druckfluid von der Verzweigungsstelle 68 in Richtung zur Anschlussstelle 67 zum Fluidsteuergerät 3 hin maximal ist. Mit anderen Worten kann in der Gegenrichtung der dritten Durchflusseinstellmittel 69 das Druckfluid schnell in den Rücklauftank 5 der Arbeitsmaschine 1 entweichen.

Schließlich sind im zweiten Fluidleitungsstrang 80 vierte Durchflusseinstellmittel 82 in Form von z.B. einer Drosselblende vorgesehen, wobei die vierten Durchflusseinstellmittel 82 ähnlich wie die dritten Durchflusseinstellmittel 69 konfiguriert sind.

Besonders vorteilhaft ist die vorstehend beschriebene Ausführungsform, bei welcher die Sicherungsvorrichtung 40 sowohl die Transportstellung sichert als auch die Aushubhöhe der Vorgewendestellung durch den Eingriffsbolzen 44 begrenzt, der am Haken 42 gefangen wird.

Es liegt jedoch auch im Rahmen der Erfindung, dass eine erfindungsgemäße Sicherungsvorrichtung so gestaltet ist, dass sie nur die Transportstellung des Arbeitsorgans sichert oder nur die Aushubhöhe in der Vorgewendestellung begrenzt. Darüber hinaus ist es auch möglich jeweils eine Sicherungsvorrichtung für die Transportstellung als auch eine für die Vorgewendestellung vorzusehen, die unabhängig voneinander arbeiten.

Ein wesentlicher Kern der Erfindung ist darin zu sehen, dass zur Ansteuerung einer Sicherungsvorrichtung, welche eine ungewünschte Verlagerung einer Arbeitseinrichtung verhindert, keine separate Betätigungseinrichtung zum Aktivieren oder Deaktivieren vorgesehen ist, sondern die Sicherungsvorrichtung durch eine Verlagerungseinrichtung betätigt wird, mit welcher die Arbeitseinrichtung in verschiedene Positionen verlagerbar ist.

Am Beispiel einer als Mähwerk ausgeführten Arbeitseinrichtung ist wenigstens ein Hydraulikzylinder, der eine Sicherungsklinke zum Entsichern einer Transportstellung zurückzieht, mit einem Hydraulikzylinder gekoppelt, mit welchem das Mähwerk in eine Arbeitsstellung abgesenkt bzw. über eine Vorgewendestellung in die Transportstellung angehoben werden kann. Die Hydraulik- bzw. Fluidleitung des - vorzugsweise einfachwirkenden - Hydraulikzylinders, der die Sicherungsklinke betätigt, ist dabei an die Hydraulik-bzw. Fluidleitung des Hydraulikzylinders angeschlossen, der für die Verlagerung des Mähwerks in die Arbeitsstellung vorgesehen ist. D.h. sobald diese Hydraulikleitung zum Absenken des Mähwerks in die Arbeitsstellung mit Hydraulik- bzw. Fluiddruck beaufschlagt wird, erhält auch der Hydraulikzylinder der Sicherungsklinke Fluiddruck und deaktiviert die Sicherungsklinke.

### Bezugszeichenliste

- 1: Arbeitsmaschine
- 2: Fluidsystem
- 3: Fluidsteuergerät
- 4: Fluidpumpe
- 5: Fluidrücklauftank
- 10: Arbeitsgerät
- 20: Traggestell
- 20a: Längsende
- 21, 22, 23: Kuppelelement(e)
- 24, 25: Anlenkbolzen
- 30: Arbeitsorgan
- 31: Ausleger
- 40: Sicherungsvorrichtung
- 41: Hakenelement
- 42, 43: Haken
- 44: Anlenkbolzen, Eingriffsbolzen
- 45: Eingriffsbolzen
- 46: Anlenkbolzen
- 50: Fluidsystem
- 55: erster Fluidzylinder
- 56: Zylindergehäuse
- 56a, 56b: Fluidanschluss
- 57: erster Kolben
- 57a: Befestigungsauge
- 57b: Druckraum
- 58: zweiter Kolben
- 58a: Befestigungsauge
- 58b: Druckraum
- 60: zweiter Fluidzylinder
- 61: Zylindergehäuse
- 61a: Befestigungsauge
- 61b: Fluidanschluss
- 62: Kolben
- 62a: Befestigungsauge
- 62b: Druckraum
- 63: Federmittel
- 65: erster Fluidleitungsstrang
- 66: Hauptstrang
- 67: Anschlussstelle
- 68: Verzweigungsstelle
- 69: dritte Durchflusseinstellmittel
- 70: erster Verzweigungsstrang
- 71: zweite Durchflusseinstellmittel
- 75: zweiter Verzweigungsstrang
- 76: erste Durchflusseinstellmittel
- 80: zweiter Fluidleitungsstrang
- 81: Anschlussstelle
- 82: vierte Durchflusseinstellmittel
- A, B, C, D: Schaltstellung(en)
- LR: Längsrichtung
- S1, S2: Schwenkachse

## Patentansprüche

1. Arbeitsgerät (10) zum Ankuppeln an eine landwirtschaftliche Arbeitsmaschine (1), aufweisend:
ein Arbeitsorgan (30), das zwischen einer Arbeitsstellung und einer Transportstellung verlagerbar ist,
einen ersten Fluidzylinder (55), der eingerichtet ist, ein zwischen der Arbeitsstellung und der Transportstellung Verlagern des Arbeitsorgans (30) anzutreiben,
eine Sicherungsvorrichtung (40), die in eine Sicherungsstellung, in der die Sicherungsvorrichtung ein Verlagern des Arbeitsorgans (30) aus der Arbeitsstellung und/oder aus der Transportstellung begrenzt, und in eine Freigabestellung stellbar ist, in der die Sicherungsvorrichtung (40) ein Verlagern des Arbeitsorgans (30) aus der Arbeitsstellung und/oder aus der Transportstellung nicht begrenzt,
einen zweiten Fluidzylinder (60), der eingerichtet ist, ein Stellen der Sicherungsvorrichtung (40) anzutreiben, sowie
einen ersten und einen zweiten Fluidleitungsstrang (65, 80), die jeweils eingerichtet sind, dem ersten Fluidzylinder (55) zum Bewirken jeweiliger Antriebsbewegungen dessen Druckfluid zuzuführen,
wobei ein Fluidleitungsstrang (65) von den ersten und zweiten Fluidleitungssträngen (65, 80) eingerichtet ist, gleichzeitig mit einer Zufuhr von Druckfluid an den ersten Fluidzylinder (55) auch dem zweiten Fluidzylinder (60) zum Bewirken einer Antriebsbewegung dessen Druckfluid zuzuführen.

2. Arbeitsgerät (10) gemäß Anspruch 1, wobei der erste Fluidleitungsstrang (65) eingerichtet ist, dem ersten Fluidzylinder (55) das Druckfluid für eine Antriebsbewegung zum in Richtung der Arbeitsstellung Verlagern des Arbeitsorgans (30) zuzuführen, und eingerichtet ist, gleichzeitig mit einer Zufuhr von Druckfluid an den ersten Fluidzylinder (55) auch dem zweiten Fluidzylinder (60) zum Bewirken einer Antriebsbewegung dessen Druckfluid zuzuführen.

3. Arbeitsgerät (10) gemäß Anspruch 2, wobei der erste Fluidleitungsstrang (65) eingerichtet ist, gleichzeitig mit einer Zufuhr von Druckfluid an den ersten Fluidzylinder (55) dem zweiten Fluidzylinder (60) das Druckfluid für eine Antriebsbewegung zum in Richtung der Freigabestellung Stellen der Sicherungsvorrichtung (40) zuzuführen.

4. Arbeitsgerät (10) gemäß einem der Ansprüche 1 bis 3, wobei der zweite Fluidzylinder (60) eingerichtet ist, auf Basis der Zufuhr des Druckfluids durch den ersten Fluidleitungsstrang (65) lediglich ein Stellen der Sicherungsvorrichtung (40) in Richtung zu einer von der Sicherungsstellung und der Freigabestellung anzutreiben, und wobei ferner Federmittel (63) vorgesehen sind, welche eingerichtet sind, ein Stellen der Sicherungsvorrichtung (40) in Richtung zu der anderen von der Sicherungsstellung und der Freigabestellung anzutreiben.

5. Arbeitsgerät (10) gemäß Anspruch 4, wobei der zweite Fluidzylinder (60) eingerichtet ist, auf Basis der Zufuhr des Druckfluids durch den ersten Fluidleitungsstrang (65) ein Stellen der Sicherungsvorrichtung (40) in Richtung zur Freigabestellung anzutreiben, und wobei die Federmittel (63) eingerichtet sind, ein Stellen der Sicherungsvorrichtung (40) in Richtung zur Sicherungsstellung anzutreiben.

6. Arbeitsgerät (10) gemäß einem der Ansprüche 1 bis 5, wobei der erste Fluidleitungsstrang (65) einen Hauptstrang (66), der sich von einer Anschlussstelle (67) zu einem Fluidsteuergerät (3) bis zu einer Verzweigungsstelle (68) erstreckt, sowie einen ersten Verzweigungsstrang (70), der sich von der Verzweigungsstelle (68) bis zu einem Fluidanschluss (56a) zu einem Druckraum (57b) des ersten Fluidzylinders (55) erstreckt, und einen zweiten Verzweigungsstrang (75) hat, der sich von der Verzweigungsstelle (68) bis zu einem Fluidanschluss (61 b) zu einem Druckraum (62b) des zweiten Fluidzylinders (60) erstreckt, und wobei in dem zweiten Verzweigungsstrang (75) erste Durchflusseinstellmittel (76) vorgesehen sind, die derart eingerichtet sind, dass eine Durchflussmenge von Druckfluid in Richtung zum Druckraum (62b) des zweiten Fluidzylinders (60) hin größer ist als eine Durchflussmenge von Druckfluid in Richtung vom Druckraum (62b) des zweiten Fluidzylinders (60) weg.

7. Arbeitsgerät (10) gemäß Anspruch 6, wobei in dem ersten Verzweigungsstrang (70) zweite Durchflusseinstellmittel (71) vorgesehen sind, die eingerichtet sind, eine Durchflussmenge von Druckfluid in Richtung vom Druckraum (57b) des ersten Fluidzylinders (55) weg zu reduzieren, so dass bei einem in die Transportstellung Verlagern des Arbeitsorgans (30) ein bewegungsverlangsamender Staudruck im Druckraum (57b) des ersten Fluidzylinders (55) entsteht.

8. Arbeitsgerät (10) gemäß Anspruch 7, wobei in dem Hauptstrang (66) dritte Durchflusseinstellmittel (69) vorgesehen sind, die derart eingerichtet sind, dass eine Durchflussmenge von Druckfluid von der Anschlussstelle (67) zu dem Fluidsteuergerät (3) in Richtung zur Verzweigungsstelle (68) des ersten Fluidleitungsstrangs (65) hin kleiner ist als eine Durchflussmenge von Druckfluid von der Verzweigungsstelle (68) in Richtung zur Anschlussstelle (67) zu dem Fluidsteuergerät (3) hin.

9. Arbeitsgerät (10) gemäß Anspruch 8, wobei ein Reduzierungsmaß der zweiten Durchflusseinstellmittel (71) für eine Durchflussmenge von Druckfluid in Richtung weg von dem Druckraum (57b) des ersten Fluidzylinders (55) gleich einem Reduzierungsmaß der dritten Durchflusseinstellmittel (69) für eine Durchflussmenge von Druckfluid von der Anschlussstelle (67) zu dem Fluidsteuergerät (3) in Richtung zur Verzweigungsstelle (68) des ersten Fluidleitungsstrangs (65) hin ist.

10. Arbeitsgerät (10) gemäß Anspruch 8 oder 9, wobei die dritten Durchflusseinstellmittel (69) derart eingerichtet sind, dass eine Durchflussmenge von Druckfluid von der Verzweigungsstelle (68) in Richtung zur Anschlussstelle (67) zu dem Fluidsteuergerät (3) hin maximal ist.

## Claims

1. A working device (10) for coupling to an agricultural working machine (1) comprising:
a working member (30) moveable between a working position and a transport position,
a first fluid cylinder (55) which is adapted to drive a movement of the working member (30) between the working position and the transport position,
a securing device (40) which is displaceable into a securing position in which the securing device limits movement of the working member (30) out of the working position and/or the transport position and into a release position in which the securing device (40) does not limit a movement of the working member (30) out of the working position and/or out of the transport position,
a second fluid cylinder (60) adapted to drive a displacement of the securing device (40), and
a first and a second fluid line assembly (65, 80) which are respectively adapted to feed pressure fluid to the first fluid cylinder (55) for implementing respective drive movements thereof,
wherein one fluid line assembly (65) of the first and second fluid line assemblies (65, 80) is adapted to also feed pressure fluid to the second fluid cylinder (60) for implementing a drive movement thereof, simultaneously with a feed of pressure fluid to the first fluid cylinder (55).

2. A working device (10) according to claim 1 wherein the first fluid line assembly (65) is adapted to feed the pressure fluid to the first fluid cylinder for a drive movement for movement of the working member (30) in the direction of the working position and is adapted to also feed pressure fluid to the second fluid cylinder (60) for implementing a drive movement thereof simultaneously with a feed of pressure fluid to the first fluid cylinder (55).

3. A working device (10) according to claim 2 wherein the first fluid line assembly (65) is adapted to feed the pressure fluid to the second fluid cylinder (60) for a drive movement for displacement of the securing device (40) in the direction of the release position simultaneously with a feed of pressure fluid to the first fluid cylinder (55).

4. A working device (10) according to one of claims 1 to 3 wherein the second fluid cylinder (60) is adapted on the basis of the feed of the pressure fluid by the first fluid line assembly (65) to only drive a displacement of the securing device (40) in the direction to one of the securing position and the release position and wherein there are further provided spring means (63) adapted to drive a displacement of the securing device (40) in the direction to the other of the securing position and the release position.

5. A working device (10) according to claim 4 wherein the second fluid cylinder (60) is adapted on the basis of the feed of the pressure fluid by the first fluid line assembly (65) to drive a displacement of the securing device (40) in the direction to the release position and wherein the spring means (63) are adapted to drive a displacement of the securing device (40) in the direction of the securing position.

6. A working device (10) according to one of claims 1 to 5 wherein the first fluid line assembly (65) has a main line assembly (66) extending from a connecting location (67) to a fluid control device (23) to a branch location (68) and a first branch line assembly (70) extending from the branch location (68) to a fluid connection (56a) to a pressure chamber (57b) of the first fluid cylinder (55) and a second branch line assembly (75) extending from the branch location (68) to a fluid connection (61b) to a pressure chamber (62b) of the second fluid cylinder (60) and wherein provided in the second branch line assembly (75) are first through-flow adjusting means (76) which are so adapted that a quantitative flow of pressure fluid in a direction towards the pressure chamber (62b) of the second fluid cylinder (60) is greater than a quantitative flow of pressure fluid in the direction away from the pressure chamber (62b) of the second fluid cylinder (60).

7. A working device (10) according to claim 6 wherein provided in the first branch line assembly (70) are second through-flow adjusting means (71) adapted to reduce a quantitative flow of pressure fluid in a direction away from the pressure chamber (57b) of the first fluid cylinder (55) so that upon movement of the working member (30) into the transport position a movement-slowing back pressure occurs in the pressure chamber (57b) of the first fluid cylinder (55).

8. A working device (10) according to claim 7 wherein provided in the main line assembly (67) are third through-flow adjusting means (69) which are so adapted that a quantitative flow of pressure fluid from the connecting location (67) to the fluid control device (3) in a direction towards the branch location (68) of the first fluid line assembly (65) is less than a quantitative flow of pressure fluid from the branch location (68) in the direction towards the connecting location (67) to the fluid control device (3).

9. A working device (10) according to claim 8 wherein a degree of reduction in the second through-flow adjusting means (71) for a quantitative flow of pressure fluid in a direction away from the pressure chamber (57b) of the first fluid cylinder (55) is equal to a degree of reduction in the third through-flow adjusting means (69) for a quantitative flow of pressure fluid from the connecting location (67) to the fluid control device (3) in the direction towards the branch location (68) of the first fluid line assembly (65).

10. A working device (10) according to claim 8 or claim 9 wherein the third through-flow adjusting means (69) is so adapted that a quantitative flow of pressure fluid from the branch location (68) in the direction towards the connecting location (67) to the fluid control device (3) is at a maximum.

## Revendications

1. Outil de travail (10) destiné à être attelé à une machine de travail agricole (1), présentant :
un organe de travail (30) qui peut être déplacé entre une position de travail et une position de transport,
un premier vérin hydraulique (55) qui est conçu pour entraîner un déplacement de l'organe de travail (30) entre la position de travail et la position de transport,
un dispositif d'arrêt (40) qui peut être placé dans une position d'arrêt dans laquelle le dispositif d'arrêt limite un déplacement de l'organe de travail (30) à partir de la position de travail et/ou de la position de transport, et dans une position de libération dans laquelle le dispositif d'arrêt (40) ne limite pas un déplacement de l'organe de travail (30) à partir de la position de travail et/ou de la position de transport,
un deuxième vérin hydraulique (60) qui est conçu pour entraîner un déplacement du dispositif d'arrêt (40), et
une première et une deuxième ligne de conduite de fluide (65, 80) qui sont conçues chacune pour amener au premier vérin hydraulique (55) leur fluide sous pression pour produire les mouvements d'entraînement respectifs,
une ligne de conduite de fluide (65) parmi les première et deuxième lignes de conduite de fluide (65, 80) étant conçue pour, simultanément à une amenée de fluide sous pression au premier vérin hydraulique (55), amener aussi son fluide sous pression au deuxième vérin hydraulique (60) pour produire un mouvement d'entraînement.

2. Outil de travail (10) selon la revendication 1, dans lequel la première ligne de conduite de fluide (65) est conçue pour amener au premier vérin hydraulique (55) le fluide sous pression pour un mouvement d'entraînement destiné à déplacer l'organe de travail (30) dans la direction de la position de travail, et conçue pour, simultanément à une amenée de fluide sous pression au premier vérin hydraulique (55), amener aussi son fluide sous pression au deuxième vérin hydraulique (60) pour produire un mouvement d'entraînement.

3. Outil de travail (10) selon la revendication 2, dans lequel la première ligne de conduite de fluide (65) est conçue pour, simultanément à une amenée de fluide sous pression au premier vérin hydraulique (55), amener au deuxième vérin hydraulique (60) le fluide sous pression pour un mouvement d'entraînement destiné à déplacer le dispositif d'arrêt (40) dans la direction de la position de libération.

4. Outil de travail (10) selon l'une des revendications 1 à 3, dans lequel le deuxième vérin hydraulique (60) est conçu pour, sur la base de l'amenée du fluide sous pression à travers la première ligne de conduite de fluide (65), entraîner seulement un déplacement du dispositif d'arrêt (40) dans la direction de l'une parmi la position d'arrêt et la position de libération, et dans lequel sont en outre prévus des moyens formant ressort (63) qui sont conçus pour entraîner un déplacement du dispositif d'arrêt (40) dans la direction de l'autre parmi la position d'arrêt et la position de libération.

5. Outil de travail (10) selon la revendication 4, dans lequel le deuxième vérin hydraulique (60) est conçu pour, sur la base de l'amenée du fluide sous pression à travers la première ligne de conduite de fluide (65), entraîner un déplacement du dispositif d'arrêt (40) dans la direction de la position de libération, et dans lequel les moyens formant ressort (63) sont conçus pour entraîner un déplacement du dispositif d'arrêt (40) dans la direction de la position d'arrêt.

6. Outil de travail (10) selon l'une des revendications 1 à 5, dans lequel la première ligne de conduite de fluide (65) présente une ligne principale (66) qui s'étend d'un point de raccordement (67) d'un module de commande de fluide (3) à un point de bifurcation (68), ainsi qu'une première ligne de bifurcation (70) qui s'étend du point de bifurcation (68) à un raccord de fluide (56a) d'une chambre de pression (57b) du premier vérin hydraulique (55) et une deuxième ligne de bifurcation (75) qui s'étend du point de bifurcation (68) à un raccord de fluide (61b) d'une chambre de pression (62b) du deuxième vérin hydraulique (60), et dans lequel des premiers moyens de réglage de débit (76) sont prévus dans la deuxième ligne de bifurcation (75), lesquels sont conçus de sorte qu'un débit de fluide sous pression dans la direction de la chambre de pression (62b) du deuxième vérin hydraulique (60) soit supérieur à un débit de fluide sous pression dans la direction opposée à la chambre de pression (62b) du deuxième vérin hydraulique (60).

7. Outil de travail (10) selon la revendication 6, dans lequel des deuxièmes moyens de réglage de débit (71) sont prévus dans la première ligne de bifurcation (70), lesquels sont conçus pour réduire un débit de fluide sous pression dans la direction opposée à la chambre de pression (57b) du premier vérin hydraulique (55), de sorte que, lors d'un déplacement de l'organe de travail (30) dans la position de transport, il apparaisse une pression dynamique ralentissant le mouvement dans la chambre de pression (57b) du premier vérin hydraulique (55).

8. Outil de travail (10) selon la revendication 7, dans lequel des troisièmes moyens de réglage de débit (69) sont prévus dans la ligne principale (66), lesquels sont conçus de sorte qu'un débit de fluide sous pression du point de raccordement (67) du module de commande de fluide (3) dans la direction du point de bifurcation (68) de la première ligne de conduite de fluide (65) soit inférieur à un débit de fluide sous pression du point de bifurcation (68) dans la direction du point de raccordement (67) du module de commande de fluide (3).

9. Outil de travail (10) selon la revendication 8, dans lequel un niveau de réduction des deuxièmes moyens de réglage de débit (71) pour un débit de fluide sous pression dans la direction opposée à la chambre de pression (57b) du premier vérin hydraulique (55) est égal à un niveau de réduction des troisièmes moyens de réglage de débit (69) pour un débit de fluide sous pression du point de raccordement (67) du module de commande de fluide (3) dans la direction du point de bifurcation (68) de la première ligne de conduite de fluide (65).

10. Outil de travail (10) selon la revendication 8 ou 9, dans lequel les troisièmes moyens de réglage de débit (69) sont conçus de sorte qu'un débit de fluide sous pression du point de bifurcation (68) dans la direction du point de raccordement (67) du module de commande de fluide (3) soit maximal.
